# EUROPEAN PATENT APPLICATION

(11) **EP 4 201 555 A1**
(43) Date of publication of application: **28.06.2023**
(21) Application number: 21020649.6
(22) Date of filing: 21.12.2021
(51) Int. Cl.: B22F 10/28, B22F 10/34, B22F 12/90, B33Y 50/02, B22F 10/32, B33Y 10/00, C22C 14/00, C22C 19/03, B29C 64/371, B33Y 30/00, C22C 1/04

(54) **METHOD OF PRODUCING COMPONENTS FROM NICKEL TITANIUM ALLOY USING AN ADDITIVE MANUFACTURING PROCESS.**

(71) Applicant: Linde GmbH, 82049 Pullach (DE)
(72) Inventor: Dubiez-Le Goff, Sophie, 82049 Pullach (DE); Fischer, Maria, 82049 Pullach (DE)
(74) Representative: Gellner, Bernd

(57) **Abstract**

The present invention refers to a method of producing a component using an additive manufacture (AM) process. Said method comprises the steps of providing a manufacturing space comprising a build platform and a heat source, providing a metal powder on the build platform, melting the metal powder with the heat source, repeating the steps of providing the powder and melting the metal powder to form a component. The method further comprises providing a source of a process gas into the manufacturing space; estimating an amount of oxygen in the manufacturing space by means of a first oxygen sensor and a second oxygen sensor; providing a controller configured to receive signals form the first oxygen sensor and the second oxygen sensor. The controller is further configured to control the amount of oxygen in the manufacturing space by adjusting the flow of the process gas into the manufacturing space if the signal from the first or the second oxygen sensor exceed a predetermined threshold, and the component is made of nickel titanium alloy.

## Description

The present invention relates to a method of producing a component using an additive manufacturing (AM) process, in particular a method and an apparatus for controlling the atmosphere when nickel-titanium alloys are used in AM, particularly, but not exclusively, products made by laser powder bed fusion (L-PBF).

In general AM is a manufacturing technology that includes a methodology whereby a heat source melts a feedstock of material which is deposited onto a substrate. Computer control of the movement of the heat source, and the source of the feedstock, makes it possible to build complex components. In AM the processing is not limited to the above-mentioned methods in which metal powders are processed but can also be used to process composites and/or polymers. The heat source can include (but is not limited to) the already mentioned laser beam or electron beam, an arc, or other plasma-based heat sources.

The main differences between processes for AM are in the way layers are deposited to create parts and in the materials that are used. Some methods melt or soften the material to produce the layers, for example selective laser melting (SLM) or direct metal laser sintering (DMLS), selective laser sintering (SLS), fused deposition modeling (FDM), or fused filament fabrication (FFF), while others cure liquid materials using different sophisticated technologies.

By nature of the L-PBF process, the component is built in a chamber with controlled gas atmosphere in a layer-by-layer sequence. The energy for melting and joining the powder particles is provided by a laser beam. Size of powder particles and diameter of focused laser beam dictate the layer thickness that can be used, which usually ranges between 0,025 - 0,08 mm. A large number of subsequent layers is necessary to obtain a component, e.g. a 3 cm high part would require approx. 1000 layers of 30 µm individual layers.

The quality of the produced component depends on the quality of the single joining points between the powder particles, which again is influenced, among others, by the reproducible gas atmosphere in the chamber. To ensure such high quality and stable process gas quality, several measurement strategies are applied, and gas is added to the chamber in a controlled way. When using metallic powders, usually, but not limited to, inert gases like argon, helium or mixtures thereof are used. For polymer feedstocks, nitrogen is most used.

Nickel-titanium alloy, or Nitinol, is a metal alloy of titanium and nickel where both elements are present in nearly equal atomic percentages. This class of alloys find its application in a variety of industries, such as aerospace or the medical device sector. Its unique mechanical and physical properties like machinability, workability and melting point or coefficient of thermal expansion make it very attractive to the relevant industrial sectors. However, the problem of the high reactivity of such an alloy when subjected to heat treatment in prior art atmospheres makes this kind of material difficult to be processed or machined.

It is known that Nitinol is very sensitive to the residual oxygen present in the process gas, and it is prone to react with oxygen, which in turn reduces its ductility due to the effect of oxides on the grain boundaries. Furthermore, the oxide layer formed on the surface of the part produces a visible orange/blue iridescent pattern, which is seen as undesirable, especially in the medical sector.

This known problem of oxygen capture during manufacturing makes Nitinol alloy parts hard to machine as the levels of oxygen during the manufacturing must be kept very low to avoid formation of the oxide layer. To date, these alloys have not been mass-produced using AM techniques because the amount of residual oxygen in the process gas was considered too high for working with NiTi alloys.

It is therefore an object of the present invention to provide a method for producing a component by AM that at least partially mitigates the problems described above.

One or more of these problems are solved by a method according to independent claim 1. Advantageous embodiments are defined in the sub-claims.

According to an aspect of the present invention there is provided a method of producing a component using an AM process comprising the steps of:
- providing a manufacturing space comprising a build platform and a heat source,
- providing a metal powder on the build platform,
- melting the metal powder with the heat source,
- repeating the steps of providing the powder and melting the metal powder to form a component;

wherein the method further comprises:
   - providing a source of a process gas into the manufacturing space;
   - estimating an amount of oxygen in the manufacturing space by means of a first oxygen sensor and a second oxygen sensor;
   - providing a controller configured to receive signals form the first oxygen sensor and the second oxygen sensor,
wherein the controller is further configured to control the amount of oxygen in the manufacturing space by adjusting the flow of the process gas into the manufacturing space if the signal from the first or the second oxygen sensor exceed a predetermined threshold, and
wherein the component is made of nickel titanium alloy.

Advantageously, detecting the amount of oxygen by two separate sensors allows for more efficient control of the working atmosphere inside the manufacturing space. This, in turn, allows production of component(s) from nickel titanium alloys or Nitinol without detrimentally changing the final properties of the component by the oxide layer that is normally formed on the surface at high oxygen levels.

In an embodiment, the AM process is a Laser Powder Bed Fusion (L-PBF) process. Advantageously, using L-PBF production of more precise shapes of the component due to the use of the laser as the energy source that moves very precisely to selectively melt just the powder that is needed to be melted.

In another embodiment, wherein the oxygen content during the manufacturing process is less than 1000 ppm, preferably less than 100 ppm, more preferably less than 20 ppm. For example, the oxygen content is between 2 and 20 ppm or between 2 and 5 ppm. All concentrations are on a volume basis, i.e. "ppm" shall mean parts per million by volume. Advantageously, the low oxygen content allows production of components from nickel titanium alloy without the formation of the undesired oxide layer.

In yet another embodiment, the process gas is argon, helium, or mixtures thereof. Advantageously, by selecting the process gas it is possible to provide the atmosphere with the most suitable physico-chemical characteristics inside the manufacturing space.

In an embodiment, the first oxygen sensor and/or the second oxygen sensor is located inside a manufacturing apparatus. In another embodiment, the first oxygen sensor and/or the second oxygen sensor is located outside the manufacturing apparatus. Advantageously, it allows flexibility of installation of the sensors, either as a built-in system or a standalone apparatus.

In an embodiment, the first oxygen sensor is a A-probe sensor. Advantageously, the presence of the A-probe sensor allows comparison of the oxygen content of the process gas with the known oxygen content of a reference gas.

In another embodiment, the second oxygen sensor is a chemical cell. Advantageously, the presence of the second sensor allows the determination of the oxygen content when it cannot be determined by the first A-probe sensor, for example at elevated temperatures when oxygen can react with hydrogen and form water, thus reducing the amount of oxygen to be measured.

In an embodiment, the build platform is pre-heated to a pre-determined temperature. Advantageously, this allows residual stresses to be avoided that may cause fracture of the manufactured part.

In an embodiment, the first and the second oxygen sensors are located adjacent to the build platform. Advantageously, the location of the oxygen sensor may be varied, as significant variations in oxygen concentration may exist within the manufacturing space thereby providing different readings in different locations.

In another embodiment, the nickel titanium alloy is a shape memory alloy. Advantageously, the shape memory properties of the manufactured part allow using it in the variety of applications where the initial shape is restored after the component is subjected to a deformation.

The method and apparatus are shown in relation to the enclosed figures, in which:
- Figure 1: shows a schematic view of an apparatus for powder bed AM by L-PBF;
- Figure 2: shows a schematic view of an exemplary apparatus for controlling a gas environment in a manufacturing space during an AM process.

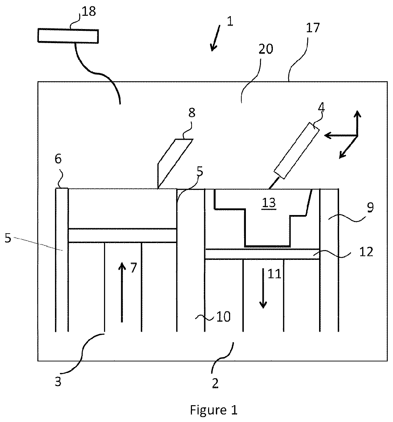

Figure 1 shows an apparatus for AM 1 according to an embodiment of the present invention.

The apparatus 1 comprises a production cylinder 2, a delivery cylinder 3 and a heat source 4.

The heat source 4 according to a preferred embodiment comprises a laser beam and a corresponding scanner system for melting/sintering metal powder (not shown). However, other heat sources, such as an electron beam in combination with a scanning system, are also possible.

The delivery cylinder 3 comprises a housing 5 with a wall 6 wherein a powder delivery piston 7 is disposed inside the housing 5.

A powder applying device 8, for example a roller, is provided for pushing a metal powder from the delivery cylinder 3 to the production cylinder 2.

The production cylinder 2 comprises a housing 9 with a wall 10.

A lift table 11 with a build platform 12 is disposed inside the wall 10 of the housing 9. The lift table 11 and the corresponding build platform 12 embody a fabrication piston.

The wall 10 of the housing 9 and the build platform 12 of the lift table 11 of the production cylinder 2 define a build space 13.

The build space 13 houses the fabrication powder bed and therefore the object being fabricated.

The build platform 12 can be an integral part of the lift table 11 of the fabrication piston or a separate part connected to the lift table 11. The build platform can be pre-heated to a predetermined temperature to avoid mechanical stresses that may cause fracture of the manufactured part. For the avoidance of doubt the term manufactured part is used interchangeably with the term component throughout this description.

Furthermore, a processing chamber 17 is provided surrounding the production cylinder 2, the delivery cylinder 3 and the heat source 4.

The manufacturing space 20 according to the present invention is therefore the build space 13 of the production cylinder 2 defined by the wall 10 of the housing 9 of the production cylinder 2 and the lift table 11 with the build platform 12 disposed inside the wall 10 of the housing 9, and/or the manufacturing space is the room within the processing chamber 17.

The apparatus 1 may be used to produce parts by L-PBF in the conventional way. The laser 4 may be controlled to heat the platform 12 with a first layer of powder (having a thickness in the range of 120 µm) to a predetermined temperature at which the process is to take place. This temperature can be below the melting point of the powder, but is high enough to cause weak sintering of the powder (in the case of Selective Laser Sintering (SLS)). Optionally, the laser fully melts the powder rather than sintering it (in the case of Selective Laser Melting (SLM)) For example, the predetermined temperature may be as high as 1000°C or more. The scanner system then controls the laser 4 to further heat selected portions of the first layer of powder so as to melt these portions. A further layer of powder is then applied on top of the powder bed, and the laser 4 is then controlled to first heat the further layer of powder to the predetermined temperature, and then to further heat selected regions so as to melt the selected regions. The process is repeated until all of the elements of the component that are required to be fused have been melted by the laser 4. At this point, formation of the part is complete.

The sintering/melting process occurs in a gaseous atmosphere under "controlled vacuum" conditions. For example, the process may take place in an argon or helium atmosphere at a pressure that is preferably in the range of 1x10⁻³ mbar and 5x10⁻³ mbar. However, other vacuum ranges are also anticipated.

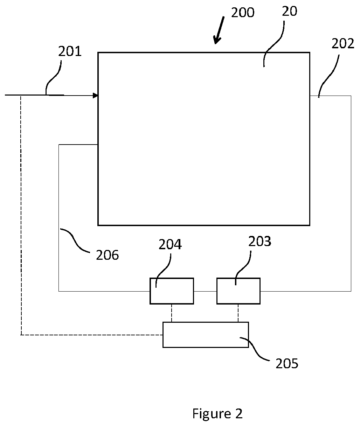

Figure 2 shows a schematic representation of an exemplary apparatus 200 for controlling a gas environment in a manufacturing space in an AM process, such as that depicted in figure 1.

The process gas is supplied from a source (not shown) into the manufacturing space via a first conduit 201. Gas supply can be sourced from single cylinders with pressure regulators, manifolded cylinders, bundles with single gas regulators, and/or manifolded bundles. It is understood that the process gas is argon, helium, or mixtures thereof. The process gas can contain impurities that are detrimental for the final quality of the component to be built. In the present disclosure, the component is built from a nickel titanium alloy. Said alloy can be a shape memory alloy and can be used in aerospace or medical devices sectors, for example.

The impurities in the process gas can contain oxygen that will form an undesired oxide film when processing the alloy inside the manufacturing space, therefore there is a need of controlling the amount of oxygen in the atmosphere inside the build chamber 20. It is understood that the oxygen content during the manufacturing process is less than 1000 ppm, preferably less than 100 ppm, more preferably less than 20 ppm, in order to avoid formation of the oxide layer that will affect the final mechanical and physicochemical properties of the manufactured component.

In order to estimate the oxygen content inside the manufacturing space, a sample of oxygen is taken from the manufacturing space via a second conduit 202. The sample of the process gas is then directed into a first sensor 203. The first sensor can be a A-probe sensor, for example. The limitations of the A-probe sensor are the following: when the process gas is heated inside the first sensor, it can react with the residual hydrogen inside the process gas and form water. The oxygen consumed for this reaction will therefore not be measured by the first sensor, and the real concentration of oxygen in the process gas can be higher. In the other words, the real concentration of oxygen can be underestimated if only the first sensor 203 is used.

To determine the amount of oxygen inside the process gas more precisely, a second sensor 204 is used. The second sensor can be a chemical cell, for example a galvanic or amperometric sensor. The skilled person will understand that the operation principle of the second sensor 204 does not involve the side reaction of oxygen with the components of the process gas, therefore it allows for more precise measurements of the amount of oxygen inside the manufacturing space.

It is understood by the skilled person that the first sensor 203 and the second sensor 204 can be located inside or outside the manufacturing apparatus 1, as exemplified in figure 1. In the other words, they can be integrated in the apparatus 1 or be used as a standalone measuring system.

Optionally, the first and the second sensors can be located adjacent to the build platform 12 in order to measure the amount of oxygen in the vicinity of the manufacturing process.

When the concentration of the oxygen in the process gas is determined, the gas sample taken previously can be returned into the manufacturing space via a third conduit 206. Optionally, it can be vented externally to the AM apparatus.

It is understood that a controller 205 controls the processes of: sampling the process gas from the manufacturing space 20; measuring the amount of oxygen by means of the first sensor 203 and the second sensor 204; and adjusting the flow of the process gas if the concentration of oxygen inside the manufacturing space exceeds the predetermined value.

By detecting and then controlling the amount of oxygen present in the atmosphere during the manufacturing it is thus advantageously possible to manufacture components made of nickel titanium alloys.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any preceding claim and a machine readable storage storing such a program. Still further, embodiments of the present invention may be conveyed electronically via any medium such as a communication signal carried over a wired or wireless connection and embodiments suitably encompass the same.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

### Reference signs

- 1: apparatus
- 2: production cylinder
- 3: delivery cylinder
- 4: heat source
- 5: housing
- 6: wall
- 7: powder delivery piston
- 8: powder applying device
- 9: housing
- 10: wall
- 11: lift table
- 12: build platform
- 13: build space
- 17: processing chamber
- 20: manufacturing space
- 200: apparatus for controlling gas environment
- 201: first conduit
- 202: second conduit
- 203: first sensor
- 204: second sensor
- 205: controller
- 206: third conduit

## Claims

1. A method of producing a component using an additive manufacture (AM) process comprising the steps of:
- providing a manufacturing space (20) comprising a build platform (12) and a heat source (4),
- providing a metal powder on the build platform (12),
- melting the metal powder with the heat source (4),
- repeating the steps of providing the powder and melting the metal powder to form a component;
wherein the method further comprises:
- providing a source of a process gas into the manufacturing space (20);
- estimating an amount of oxygen in the manufacturing space by means of a first oxygen sensor (203) and a second oxygen sensor (204);
- providing a controller (205) configured to receive signals form the first oxygen sensor (203) and the second oxygen sensor (204),
wherein the controller (205) is further configured to control the amount of oxygen in the manufacturing space (20) by adjusting the flow of the process gas into the manufacturing space (20) if the signal from the first (203) or the second oxygen sensor (204) exceed a predetermined threshold, and
wherein the component is made of nickel titanium alloy.

2. The method of claim 1, wherein the AM process is a Laser Powder Bed Fusion (L-PBF) process.

3. The method of claim 1 or claim 2, wherein the oxygen content during the manufacturing process is less than 1000 ppm, preferably less than 100 ppm, more preferably less than 20 ppm.

4. The method of any preceding claim, wherein the process gas is argon, helium, or mixtures thereof.

5. The method of any preceding claim, wherein the first oxygen sensor (203) and/or the second oxygen sensor (204) is located inside a manufacturing apparatus.

6. The method of any of claim 1 to 4, wherein the first oxygen sensor (204) and/or the second oxygen sensor (205) is located outside the manufacturing apparatus.

7. The method of any preceding claim, wherein the first oxygen sensor (203) is a A-probe sensor.

8. The method of any preceding claim, wherein the second oxygen sensor (204) is a chemical cell.

9. The method of any preceding claim, wherein the build platform (12) is pre-heated to a pre-determined temperature.

10. The method of claim 5, wherein the first (203) and the second (204) oxygen sensors are located adjacent to the build platform (12).

11. The method of any preceding claim wherein the nickel titanium alloy is a shape memory alloy.
